# EUROPEAN PATENT SPECIFICATION

(11) **EP 3 598 682 B1**
(45) Date of publication and mention of the grant of the patent: **29.09.2021**
(21) Application number: 18794442.6
(22) Date of filing: 26.04.2018
(51) Int. Cl.: H04L 1/18

(54) **METHOD AND APPARATUS FOR UPLINK DATA TRANSMISSION**
VERFAHREN UND VORRICHTUNG ZUR UPLINK-DATENÜBERTRAGUNG
PROCÉDÉ ET APPAREIL DE TRANSMISSION DE DONNÉES EN LIAISON MONTANTE

(30) Priority: 05.05.2017 CN 201710314149
(43) Date of publication of application: 22.01.2020
(73) Proprietor: Huawei Technologies Co., Ltd., Longgang District Shenzhen, Guangdong 518129 (CN)
(72) Inventor: ZHENG, Juan, Shenzhen Guangdong 518129 (CN); GUAN, Lei, Shenzhen Guangdong 518129 (CN)
(74) Representative: Pfenning, Meinig & Partner mbB
(86) International application number: PCT/CN2018/084590
(87) International publication number: WO 2018/201959

(56) References cited:
- WO-A1-2016/130362
- CN-A- 101 040 557
- CN-A- 101 404 566
- CN-A- 102 148 676
- US-A1- 2008 081 651
- US-A1- 2016 234 820

## Description

### TECHNICAL FIELD

This application relates to the communications field, and in particular, to an uplink data transmission method and apparatus.

### BACKGROUND

In a long term evaluation (Long Term Evaluation, LTE) system, uplink grant-based uplink data transmission includes the following process: A terminal device first requests an uplink data transmission scheduling grant from a base station, and when obtaining the uplink data transmission scheduling grant, sends uplink data to the base station. A process in which the terminal device obtains the uplink data transmission scheduling grant takes a relatively long time, and a speed of the uplink data transmission is affected.

To improve a speed of the uplink data transmission, an uplink grant-free uplink data transmission method is used for the uplink data transmission. The uplink grant-free uplink data transmission includes the following process: The terminal device directly sends uplink data to the base station without a need to wait for the uplink data transmission scheduling grant sent by the base station, and waits to receive feedback information sent by the base station. The feedback information indicates a status of receiving the uplink data by the base station. If the base station does not receive the uplink data sent by the terminal device, in other words, missed detection occurs in the base station, the terminal device cannot receive, in a preset time window, the feedback information sent by the base station. In this case, the terminal device retransmits the uplink data, and again waits for the feedback information sent by the base station.

However, to ensure scheduling flexibility on a base station side, a time window of the terminal device is usually relatively long. Therefore, when the missed detection occurs in the base station, the terminal device needs a relatively long time to find that the missed detection occurs in the base station, and the base station cannot actively find that the missed detection occurs. An interval between a moment at which the terminal device finds the missed detection and a moment at which the terminal device re-uploads the uplink data is relatively long, thereby affecting a quantity of retransmission times and further causing low data reliability.

US 2008/081651 A1 describes that in a radio communication system that performs HARQ (Hybrid Automatic Repeat request), a mobile station returns the HARQ process state of the mobile station to the free state by the reception of ACK. In this state, the mobile station, upon receiving from the scheduling base station an SA (scheduling assignment) for assigning resources for retransmission, transmits a transmission process state notification reporting that the mobile station is in the free state when the mobile station does not have new data to be transmitted. The base station therefore recognizes that the mobile station is in the free state and returns the HARQ process state of the base station to the free state and halts the assignment of resources to the mobile station.

In US 2016/234820 A1 methods, systems, and devices are described for wireless communication. A transmitting device may send a signal including multiple transport blocks corresponding to multiple simultaneous hybrid automatic repeat request (HARQ) processes. Additional control information may be used to support the multiple simultaneous HARQ processes. For instance, the additional control information may indicate the number of available HARQ processes, an activity state for each HARQ process (e.g., active new data, active retransmission, or inactive), and the redundancy versions of each HARQ process. In some cases, the additional control information may be included in a downlink grant. A receiving device may respond with an acknowledgement or negative acknowledgment (ACK/NACK) for each of the transport blocks. The transmitting device may identify a retransmission status for each HARQ process based on the ACK/NACKs, and transmit new redundancy versions (or new data) to the receiving device.

### SUMMARY

This application provides an uplink data transmission method and apparatus, to resolve a low reliability problem of data in an existing uplink data transmission method. The invention is defined by the appended claims.

### BRIEF DESCRIPTION OF DRAWINGS

FIG. 1 shows a network architecture applicable to an embodiment of this application;
FIG. 2 is a schematic diagram of UL grant free transmission;
FIG. 3 is a schematic flowchart 1 of an uplink data transmission method according to an embodiment of this application;
FIG. 4 is a schematic diagram of an uplink data transmission method for a plurality of HARQ processes according to this application;
FIG. 5 is a schematic diagram 1 of a method for transmitting process status information of a plurality of HARQ processes according to this application;
FIG. 6 is a schematic flowchart 2 of an uplink data transmission method according to an embodiment of this application;
FIG. 7 is a schematic diagram 2 of a method for transmitting process status information of a plurality of HARQ processes according to this application;
FIG. 8 is a schematic flowchart 3 of an uplink data transmission method according to an embodiment of this application;
FIG. 9 is a schematic diagram 3 of a method for transmitting process status information according to this application;
FIG. 10 is a schematic diagram 4 of a method for transmitting process status information according to this application;
FIG. 11 is a schematic flowchart 4 of an uplink data transmission method according to an embodiment of this application;
FIG. 12 is a schematic structural diagram 1 of an uplink data transmission apparatus according to an embodiment of this application;
FIG. 13 is a schematic structural diagram 2 of an uplink data transmission apparatus according to an embodiment of this application;
FIG. 14 is a schematic structural diagram of a terminal device according to an embodiment of this application; and
FIG. 15 is a schematic structural diagram of an access network device according to an embodiment of this application.

### DESCRIPTION OF EMBODIMENTS

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that with the evolution of the network architecture and the emergence of new service scenarios, the technical solutions provided in the embodiments of this application are also applicable to similar technical problems.

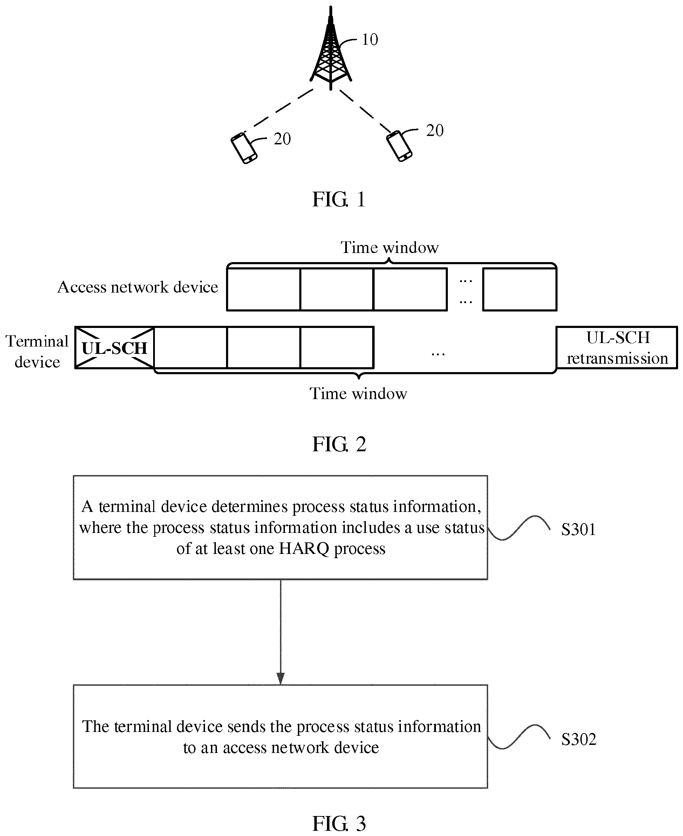

The following describes a possible network architecture in an embodiment of this application with reference to FIG. 1. FIG. 1 shows a network architecture applicable to an embodiment of this application. As shown in FIG. 1, the network architecture provided in this embodiment includes an access network device 10 and a terminal device 20.

The access network device 10 is a device that connects the terminal device to a wireless network, may be a base transceiver station (Base Transceiver Station, BTS for short) in global system for mobile communications (Global System of Mobile communication, GSM for short) or code division multiple access (Code Division Multiple Access, CDMA for short), may be a NodeB (NodeB, NB for short) in wideband code division multiple access (Wideband Code Division Multiple Access, WCDMA for short), or may be an evolved NodeB (Evolutional Node B, eNB or eNodeB for short) in long term evolution (Long Term Evolution, LTE for short), or a relay station, an access point, a gNB in a future 5G network, or the like. This is not limited herein. FIG. 1 illustrates a possible schematic diagram of an example in which the access network device is a base station.

A terminal device 20 may be a wireless terminal or a wired terminal. The wireless terminal may refer to a device that provides a user with voice and/or other service data connectivity, a handheld device with a radio connection function, or another processing device connected to a radio modem. The wireless terminal may communicate with one or more core networks through a radio access network (Radio Access Network, RAN for short). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, the wireless terminal may be a device such as a personal communication service (Personal Communication Service, PCS for short) phone, a cordless telephone set, a session initiation protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile console (Mobile Console), a remote station (Remote Station), a remote terminal (Remote Terminal), an access terminal (Access Terminal), a user terminal (User Terminal), a user agent (User Agent). The wireless terminal may also be a relay station. This is not limited herein. FIG. 1 illustrates a possible schematic diagram of an example in which the terminal device is a mobile phone.

In an LTE system, a data transmission process includes two parts: an uplink scheduling process and a downlink scheduling process. To ensure that the uplink scheduling process meets a requirement of an ultra-reliable and low-latency communications (Ultra-Reliability Low Latency Communication, URLLC) technology, uplink grant-free (Uplink grant free, UL grant free) transmission may be used in an uplink data transmission process. In an implementation of the UL grant free transmission, the terminal device may directly transmit uplink data without a need to wait for an uplink grant of the access network device. For example, when the terminal device needs to perform uplink transmission, the terminal device may directly send uplink data without a need to first send scheduling request (Scheduling Request, SR) control information and then wait for the uplink grant (Uplink Grant, UL grant) fed back by the access network device. The access network device may feed back hybrid automatic repeat request-acknowledgement (Hybrid Auto Repeat Request Acknowledgement, HARQ-ACK) information to the terminal device, so that the terminal device can learn an uplink data receiving status of the access network device. The HARQ-ACK information may be an acknowledgement (Acknowledgement, ACK) or a negative acknowledgement (Non-Acknowledgement, NACK). The ACK indicates that the access network device correctly receives the uplink data transmitted by the terminal device, and the NACK indicates that the access network device does not correctly receive the uplink data transmitted by the terminal device. Optionally, the access network device may also indicate, by using the uplink scheduling grant UL grant, whether uplink data previously transmitted by the terminal device is correctly received on an access network device side. Specifically, a new data indicator (New Date Indicator, NDI) included in the UL grant may be used to indicate whether the uplink data previously transmitted by the terminal device is correctly received on the access network device side. The terminal device may determine, by using the NDI in the UL grant and a HARQ process identifier, whether previously transmitted data corresponding to the HARQ process indicated by the identifier is correctly received by the access network device. Further, the access network device may further instruct, by using the UL grant, the terminal device to retransmit uplink data that is not correctly received by the eNB.

UL grant free transmission is different from conventional scheduling-based uplink data transmission, and when the terminal device needs to perform uplink data transmission, the terminal device may directly select an uplink transmission resource to perform uplink transmission. Therefore, it is possible that the terminal device sends uplink data, but the base station does not detect the uplink data (in this application, for ease of description, such case is referred to as "missed detection"). To ensure reliability of the uplink data, after sending the uplink data, the terminal device usually needs to receive the HARQ-ACK information sent by the access network device, and then performs subsequent steps. If the missed detection occurs, the terminal device cannot receive the HARQ-ACK information sent by the access network device, and keeps waiting, and consequently, sending of the uplink data does not meet a delay requirement in the URLLC technology.

To ensure that uplink data transmission meets the delay requirement in the URLLC technology, a time window is prescribed between the access network device and the terminal device. FIG. 2 is a schematic diagram of UL grant free transmission. As shown in FIG. 2, after the terminal device sends the uplink data (because the uplink data is carried on an uplink shared channel (Uplink Shared Channel, UL-SCH), for ease of description, the UL-SCH is used to denote the uplink data in this embodiment of this application), if the terminal device does not receive, in the prescribed time window, the HARQ-ACK information that is corresponding to the uplink data and that is sent by the access network device, the terminal device may retransmit the uplink data after the time window. For ease of subsequent description, in this embodiment of this application, the prescribed time window is referred to as a HARQ-ACK feedback time window. Optionally, if the terminal device does not detect, in the HARQ-ACK feedback time window corresponding to the uplink data after sending the uplink data, the HARQ-ACK information that is corresponding to the uplink data and that is sent by the access network device, the terminal device retransmits the uplink data in a time unit following the HARQ-ACK feedback time window.

A HARQ-ACK feedback time window is prescribed between the access network device and the terminal device, so that a delay of uplink data transmission can be reduced. However, to ensure scheduling flexibility of the access network device side, the HARQ-ACK feedback time window of the terminal device is usually relatively long. Therefore, when missed detection occurs in the access network device, the terminal device needs a relatively long time to find the missed detection of the base station, and the access network device cannot actively find the missed detection. An interval between a moment at which the terminal device finds the missed detection and a moment at which the terminal device re-uploads the uplink data is relatively long, thereby affecting a quantity of retransmission times and further causing low data reliability. Further, because the missed detection occurs in the access network device, the access network device cannot perform scheduling-based uplink data retransmission on uplink data that is not detected. After the HARQ-ACK feedback time window, the terminal device can still perform only UL grant free uplink data retransmission, and consequently, the uplink data may collide with uplink data sent by another terminal device, thereby further affecting uplink transmission reliability.

To resolve the foregoing problem, this application provides an uplink data transmission method. While sending the uplink data, the terminal device also sends the process status information to the access network, to indicate an uplink data transmission status on a terminal device side, thereby improving detection reliability of uplink data transmission. By using specific embodiments, the following describes in detail the uplink data transmission method provided in this application.

FIG. 3 is a schematic flowchart 1 of an uplink data transmission method according to an embodiment of this application. The method is executed by a terminal device. As shown in FIG. 3, the method includes the following steps.

S301. The terminal device determines process status information, where the process status information includes a use status of at least one HARQ process.

The use status of the HARQ process is any one of the following: the HARQ process is not used to send uplink data, the HARQ process is used to send uplink data and no feedback information is received, or the HARQ process is used to send uplink data and feedback information is received.

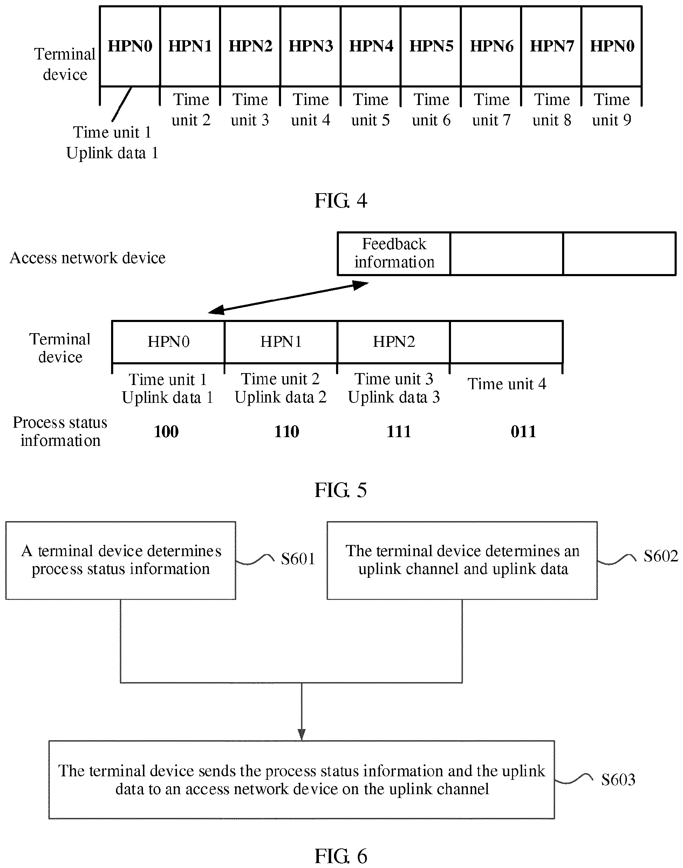

For example, the terminal device runs at least two HARQ processes for transmitting uplink data, to improve data transmission efficiency. After sending one piece of uplink data, the terminal device waits to receive HARQ-ACK information that is sent by an access network device and that is specific to the uplink data, and then determines, based on specific content of the HARQ-ACK information, to retransmit the uplink data (retransmission) or send one piece of new data (new transmission) different from the uplink data. In consideration of a propagation delay between the access network device and the terminal device, a delay of processing received uplink data by the access network device, a delay of processing received HARQ-ACK information by the terminal device, and a processing delay of preparing subsequent uplink data transmission based on the HARQ-ACK information, to improve data transmission efficiency, after sending one piece of uplink data, the terminal device may send other uplink data. Different HARQ processes may be used, so that the access network device can distinguish different uplink data. FIG. 4 is a schematic diagram of an uplink data transmission method for a plurality of HARQ processes according to this application. FIG. 4 is used as an example. The terminal device sends uplink data 1 in a time unit 1 in FIG. 4. In consideration of the propagation delay and the processing delays described above, it is assumed that the terminal device can determine, in an earliest time unit 9 based on the HARQ-ACK information fed back by the access network device, whether the uplink data 1 needs to be retransmitted, and if the terminal device needs to transmit uplink data from a time unit 2 to a time unit 8 in FIG. 4, the terminal device may use different HARQ processes for transmission. For example, to distinguish different uplink data, HARQ process numbers (HARQ Process Number, HPN) corresponding to uplink data transmitted from the time unit 1 to the time unit 8 in FIG. 4 may be respectively denoted as 0 to 7. In a time unit 9, the terminal device may retransmit, by reusing a HARQ process whose HPN is 0, uplink data sent in the time unit 1, or newly transmit a piece of uplink data by using the HARQ process whose HPN is 0.

It should be noted that in this embodiment of this application, a time length of a time unit may be represented by a time length of a transmission time interval (Transmission Time Interval, TTI). Alternatively, it may be understood that the time unit is represented by the TTI. For example, a time length of one time unit is one TTI. The TTI may be measured in a millisecond (millisecond, ms), or may be measured in orthogonal frequency division multiplexing (Orthogonal Frequency Division Multiplexing, OFDM). For example, a time length of one TTI is 0.5 ms, seven symbols, four symbols, three symbols, two OFDM symbols, or one OFDM symbol. Because a variable TTI mechanism is introduced in a 5G system, a specific length of the TTI is not limited in this embodiment of this application. Optionally, in this embodiment of this application, a time unit may be understood as a minimum unit used for data transmission. The data herein includes control data and/or service data.

One HARQ process may be used for a plurality of times of uplink data transmission. Therefore, a use status of any HARQ process may be as follows: The HARQ process is not used to send uplink data, the HARQ process is used to send uplink data and no feedback information is received, or the HARQ process is used to send uplink data and feedback information is received. The use status of any HARQ process may further be one of the foregoing three statuses in turn, or one of the status of "being used to send uplink data and no feedback information received" and the status of "being used to send uplink data and feedback information received" in turn. When the HARQ process is not used to send the uplink data, it indicates that the terminal device does not use the HARQ process to send the uplink data. For example, a maximum of eight uplink HARQ processes can be supported by the terminal device, and HPNs corresponding to the eight HARQ processes respectively are 0 to 7. It is assumed that an uplink data transmission requirement of the terminal device is relatively small, and only four HARQ processes are required to complete uplink data transmission (for example, HPNs are respectively 0 to 3), and HARQ processes whose HPNs are respectively 0 to 3 may be considered as HARQ processes used to send the uplink data, and HARQ processes whose HPNs are respectively 4 to 7 are considered as HARQ processes that are not used to send the uplink data.

HARQ processes corresponding to the process status information reported by the terminal device may be all HARQ processes that are preset in the terminal device and that can be used for uplink data transmission. For example, if a maximum of M uplink HARQ processes can be supported by the terminal device, where M is a positive integer, the HARQ process may be any one of the M HARQ processes. Alternatively, the HARQ processes corresponding to the process status information reported by the terminal device may be HARQ processes currently used for uplink data transmission. For example, if uplink data of the terminal device is relatively small in a period of time, only N HARQ processes in the M HARQ processes may be used, where N is a positive integer and N is less than M, and the HARQ process may be any one of the N HARQ processes. Optionally, the HARQ processes corresponding to the process status information reported by the terminal device may be only UL grant free HARQ processes.

S302. The terminal device sends the process status information to the access network device.

For example, after determining the process status information, the terminal device sends the process status information to the access network device. When receiving the process status information, the access network device may learn an uplink data transmission status on a terminal device side based on the process status information. An LTE system is used as an example. When UL-SCH is sent, to ensure that the UL-SCH can be demodulated by the access network device, the terminal device sends a demodulation reference signal (Demodulation Reference Signal, DMRS) used to demodulate the UL-SCH. Therefore, the access network device may determine, by detecting whether a DMRS exists, whether the terminal device uploads the UL-SCH. However, in a UL grant free uplink data transmission method, to reduce overheads of reserved UL grant free resources, a same UL grant free resource is usually shared in a multiuser multiplexing manner. Two terminal devices may simultaneously use a same UL grant free resource, and in this way, mutual collision of DMRSs cannot be avoided, or a DMRS sent by one terminal device collides with UL-SCH sent by another terminal, thereby affecting receiving reliability of the DMRS and causing missed detection. When the access network device misses detection of the uplink data sent by the terminal device, the terminal device may find missed detection only when the HARQ-ACK feedback time window ends, and the access network device cannot actively learn the missed detection. When the terminal device separately sends the uplink data by using a plurality of HARQ processes, DMRSs of the uplink data are independent of each other, and the access network device can determine whether the uplink data exists only by detecting DMRSs respectively corresponding to the uplink data.

In this embodiment of this application, the terminal device further sends, in addition to the uplink data, the process status information to the access network device. The process status information is used to indicate a use status of at least one HARQ process. When receiving the process status information, the access network device may learn, based on the process status information, the use status of the HARQ process running on the terminal device. For example, when missed detection occurs in the access network device, and the uplink data is not detected, if the access network device learns, based on the received process status information, that the uplink data is sent by the terminal device, the access network device may immediately find the missed detection, and further notify the terminal device of the missed detection. For example, the access network device may send, in a prescribed time window for uplink data that is not detected, downlink control information through a downlink control channel, where the downlink control information may include only NACK information, and is used to indicate, to the terminal device, that the access network device cannot correctly receive the data. After receiving the indication information, the terminal device may retransmit the missing uplink data based on a UL grant free uplink transmission resource. Alternatively, the downlink control information may be uplink scheduling control information, where the uplink scheduling control information may include NACK information. After receiving the downlink control information, the terminal device may retransmit, based on the uplink scheduling control information, the uplink data that is not detected. In this case, it may be understood that when retransmitting the uplink data that is not detected, the terminal device transmits the uplink data based on an uplink grant.

For example, the access network device may further determine, based on the received process status information, whether the terminal device receives feedback information sent by the access network device. The process status information is sent to the access network device, so that both the access network device and the terminal device can learn the use status of the HARQ process running on the terminal device. Therefore, the access network device can determine, as early as possible based on the process status information, whether missed detection occurs, so that the terminal device can re-upload the uplink data in a relatively short interval, thereby ensuring a quantity of retransmission times and further ensuring data reliability.

For example, based on the foregoing embodiment, the at least one HARQ process includes an uplink grant-free HARQ process, or includes an uplink grant-free HARQ process and an uplink grant-based HARQ process.

Specifically, when determining the process status information, the terminal device may determine only a use status of the uplink grant-free HARQ process, and report the use status of the uplink grant-free HARQ process to the access network device. Alternatively, a use status of the uplink grant-based HARQ process may also be determined, and both the use status of the uplink grant-based HARQ process and the use status of the uplink grant-free HARQ process are reported to the access network device. The access network device may obtain usage statuses of all HARQ processes from the process status information, to ensure reliability of the uplink data transmission method. For example, the manner of sending the process status information to the access network device provided in this embodiment of this application may be further applied to another communication scenario, to resolve a problem that communication efficiency is low and communication is unreliable because the access network device and the terminal device do not inform each other.

Based on the foregoing embodiments, the following describes a specific form of the process status information by using specific embodiments.

In a feasible implementation, the process status information indicates a use status of each of the at least one HARQ process in a bitmap form.

For example, the process status information sent by the terminal device to the access network device may be in the bitmap form. The process status information in the bitmap form includes the use status of at least one HARQ process, and use statuses of HARQ processes are arranged in the bitmap in a prescribed sequence. After receiving the process status information in the bitmap form, the access network device sequentially reads the process status information, to obtain the use status of each HARQ process. An identifier of each HARQ process does not need to be carried in the process status information, in order that the access network device learns a correspondence between each use status in the process status information and a HARQ process. The process status information in the bitmap form is prescribed between the terminal device and the access network device, to reduce a quantity of bits of the process status information and reduce an amount of data that needs to be transmitted.

For example, based on the foregoing embodiments, a quantity of bits of the process status information is a first preset value, a quantity of use statuses of HARQ processes that are included in the process status information is a second preset value, and the first preset value is greater than or equal to the second preset value.

Specifically, the terminal device and the access network device prescribe that the quantity of bits of the process status information is the first preset value based on a total quantity of all HARQ processes on the terminal device (a maximum quantity of uplink HARQ processes that can be supported by the terminal device). Alternatively, the terminal device and the access network device prescribe, based on the total quantity of uplink grant-free HARQ processes on the terminal device, that the quantity of bits of the process status information is the first preset value. A total quantity of HARQ processes included in the process status information is the second preset value. Optionally, when a use status of each HARQ process is represented by using one bit in the process status information, the first preset value is the same as the second preset value. When a use status of each HARQ process is represented by using at least one bit in the process status information, the first preset value is greater than the second preset value. Use statuses of HARQ processes may occupy a same quantity of bits in the process status information, or may occupy different quantities of bits.

For example, each time when the terminal device obtains the process status information, a quantity of obtained use statuses of HARQ processes needs to be the second preset value. When a use status of any HARQ process changes, the terminal device may obtain new process status information and send the new process status information to the access network device, or may periodically obtain new process status information based on a present cycle, and send the new process status information to the access network device.

For example, in this embodiment of this application, the first preset value may be preconfigured or predefined, or may be indicated by the access network device by using dynamic signaling. The preconfiguration may be implemented by using radio resource control (Radio Resource Control, RRC) signaling or another manner. This is not specifically limited. A dynamic signaling indication includes a physical layer signaling indication. To be specific, the access network device may notify the terminal device of the first preset value through a downlink channel. Optionally, the downlink channel is a physical downlink control channel (Physical Downlink Control Channel, PDCCH), an enhanced physical downlink control channel (Enhanced Physical Downlink Control Channel, EPDCCH), a physical downlink shared channel (Physical Downlink Shared Channel, PDSCH), or a downlink channel in a 5G system. This is not limited in this embodiment. Alternatively, the terminal device may notify the access network device of the first preset value through an uplink channel. Optionally, the uplink channel is a physical uplink control channel (Physical Uplink Control Channel, PUCCH), a physical uplink shared channel (Physical Uplink Shared Channel, PUSCH), or an uplink channel in a 5G system. This is not limited in this embodiment. Description of a method specific to the second preset value is the same. Details are not described herein again. A manner of determining the first preset value may be the same as or different from a manner of determining the second preset value.

The process status information is in the bitmap form, and as a result, a size of the process status information is fixed. When the access network device reads the process status information, a reading manner is simple and a reading speed is relatively high. All process status information sent by the terminal device to the access network device each time may include use statuses of a same quantity of HARQ processes. In other words, when receiving one piece of process status information, the access network device may obtain use statuses of a plurality of HARQ processes. Therefore, even if the access network device fails to receive process status information corresponding to the uplink data while missing detecting the uplink data, the access network device may still obtain the use status of the HARQ process by using process status information corresponding to other uplink data. The access network device may reliably detect the missed detection in a timely manner, thereby improving reliability of the uplink data transmission method.

For example, based on the foregoing embodiment, a use status of any of the at least one HARQ process separately occupies 1 bit in the process status information.

When the use status of the HARQ process is that the HARQ process is used to send the uplink data and no feedback information is received, the use status of the HARQ process is represented by a first value; or when the use status of the HARQ process is that the HARQ process is not used to send the uplink data or the HARQ process is used to send the uplink data and the feedback information is received, the use status of the HARQ process is represented by a second value, where the first value is different from the second value.

Specifically, the missed detection may occur in the access network device only when the use status of the HARQ process is that the HARQ process is used to send the uplink data and no feedback information is received. When the use status of the HARQ process is that the HARQ process is not used to send the uplink data or is used to send the uplink data and the feedback information is received, the missed detection may not occur in the access network device, and reliability of uplink data transmission may not be affected. Therefore, the first value may be used to indicate that the HARQ process is used to send the uplink data and no feedback information is received, and the second value may be used to indicate that the HARQ process is not used to send the uplink data or is used to send the uplink data and the feedback information is received. The first value and the second value are respectively 0 and 1, or 1 and 0. Use statuses that are of the two HARQ processes and that indicate that the HARQ process is not used to send the uplink data or the HARQ process is used to send the uplink data and the feedback information is received are represented by using a same value, and a size of the process status information is reduced.

For example, when there are N HARQ processes in the process status information, a use status of each HARQ process may be represented by using X(N-1)X(N-2)...X(0) in the process status information. X(i) represents a use status of an uplink HARQ process whose HPN is i, where i is an integer greater than or equal to 0 and less than or equal to N-1. A value of X(i) is 0 or 1. FIG. 5 is a schematic diagram 1 of a method for transmitting process status information of a plurality of HARQ processes according to this application. As shown in FIG. 5, it is assumed that the terminal device can use a maximum of three HARQ processes to perform UL grant free transmission, and a use status of each HARQ process is represented by one bit. In this case, the process status information includes three bits of information in total. It is assumed that the terminal device sends uplink data 1 to uplink data 3 respectively by using an HPNO to an HPN2 in each of a time unit 1 to a time unit 3, and receives feedback information specific to the HPNO from the access network device in the time unit 3. In this case, process status information in the time unit 1 to a time unit 4 is respectively 100, 110, 111, and 011. Three bits are respectively corresponding to the HPNO, an HPN1, and the HPN2 from left to right. 1 indicates that a corresponding HARQ process is used to send the uplink data and no feedback information specific to the HARQ process is received from the access network device; and 0 indicates that the HARQ process is used to send the uplink data and the feedback information specific to the HARQ process is received from the access network device, or the HARQ process is not used to send the uplink data. In another feasible implementation, the process status information further includes an identifier of each of the at least one HARQ process. The HPNO/HPN1/HPN2 respectively represents a HARQ process whose HPN is 0/1/2.

For example, the missed detection may occur in the access network device only when the use status of the HARQ process is that the HARQ process is used to send the uplink data and no feedback information is received. When the use status of the HARQ process is that the HARQ process is not used to send the uplink data or is used to send the uplink data and the feedback information is received, the missed detection may not occur in the access network device, and reliability of the uplink data transmission method may not be affected. The process status information may include only a use status indicating that the HARQ process is used to send the uplink data and no feedback information is received. Because the access network device does not know use statuses that are of HARQ processes, that are included in process status information, and that are sent by the terminal device each time, the process status information further includes an identifier of each HARQ process. The process status information includes only the use status indicating that the HARQ process is used to send the uplink data and no feedback information is received. When there are a relatively large total quantity of HARQ processes, or there is a relatively small quantity of uplink data that needs to be sent, a data volume of the process status information may be reduced.

Further, based on any one of the foregoing embodiments, an embodiment of this application further provides an uplink data transmission method. A process status information and uplink data sending manner is described in detail. In the uplink data transmission method provided in this embodiment, the process status information and the uplink data are sent on a same channel. FIG. 6 is a schematic flowchart 2 of an uplink data transmission method according to an embodiment of this application. As shown in FIG. 6, the uplink data transmission method includes the following steps.

S601. A terminal device determines process status information, where the process status information includes a use status of at least one HARQ process.

S602. The terminal device determines an uplink channel and uplink data.

S601 is the same as S301 in the embodiment shown in FIG. 3. Details are not described in this application. There is no strict sequence relationship between S601 and S602, and S601 and S602 may be performed at the same time, or may be performed in succession.

In this embodiment of this application, the terminal device may determine, in a preconfigured or predefined manner or a dynamic signaling notification manner, an uplink channel for transmitting channel state information. The terminal device may further determine, based on a scheduling instruction of a base station or a data transmission requirement of the terminal device, uplink data that needs to be transmitted.

S603. The terminal device sends the process status information and the uplink data to an access network device on the uplink channel.

Specifically, before sending the process status information, the terminal device needs to determine an uplink channel for sending the process status information, and before sending the uplink data, the terminal device needs to determine the uplink channel for sending the uplink data. In this embodiment, the uplink data and the process status information are sent on a same channel. For example, in an LTE system, the uplink data and the process status information may be transmitted on a PUSCH, or in a new radio (New Radio, NR) system, the uplink data and the process status information may be sent on an uplink service data channel included in the NR system. The uplink data and the process status information are sent on a same channel, so that a design of the uplink channel that carries the process status information can be simplified. An existing uplink channel design is reused as much as possible, thereby reducing complexity of the channel design.

Optionally, the uplink data and the process status information are jointly encoded on the uplink channel. Signaling overheads can be reduced by using joint encoding, and no additional control signaling needs to be brought in to transmit the process status information. For example, when the uplink data and the process status information are transmitted on a same uplink channel by using joint encoding, for ease of description, both the uplink data and the process status information that are transmitted on the uplink channel are referred to as uplink service control information. To help the access network device determine, after receiving the uplink service control information, information that is included in the uplink service control information and that belongs to the process status information, the terminal device and the access network device need to have a same understanding about a bit location occupied by the process status information in the uplink service control information. The bit location occupied by the process status information in the uplink service control information may be specified in a preconfigured or predefined manner. An implementation of the preconfiguration is the same as that described above. Details are not described herein again.

Optionally, independent encoding may also be used when the uplink data and the process status information are transmitted on a same uplink channel. An advantage is that after receiving the uplink data and the process status information, the access network device may separately decode the uplink data and the process status information. In this way, even if the uplink data is not correctly received, the process status information may be correctly received. It may be understood that, in order that the access network device correctly receives the process status information, the access network device first needs to determine a time-frequency resource occupied by the process status information in the time-frequency resource included in the uplink channel, so that the access network device can receive the process status information at a corresponding time-frequency resource location, and then decodes the received process status information. Therefore, a time-frequency resource (including a size of the time-frequency resource and/or a location of the time-frequency resource) occupied by the process status information in the time-frequency resource included in the uplink channel may be preconfigured or predefined. In addition, not all process status information is sent on an uplink channel for transmitting uplink data. Therefore, optionally, the terminal device may further send one piece of indication information on the uplink channel, where the indication information is used to indicate whether the terminal device sends the process status information on the uplink channel. For example, the indication information may be 1 bit, and occupy a preconfigured or predefined time-frequency resource location on the time-frequency resource included in the uplink channel.

It should be noted that, for either joint encoding or independent encoding, in this embodiment of this application, how the terminal device and the access network device determine a resource occupied by the channel state information (including a bit resource occupied during joint encoding and a time-frequency resource occupied during independent encoding) is not specifically limited.

Optionally, in this embodiment of this application, the process status information may also be sent through another uplink channel. The another uplink channel is different from the uplink channel for sending the uplink data. For example, in the LTE system, the another uplink channel may be a PUCCH. An advantage is that process status information of multiuser transmission can be reused on the PUCCH, thereby reducing uplink channel overheads.

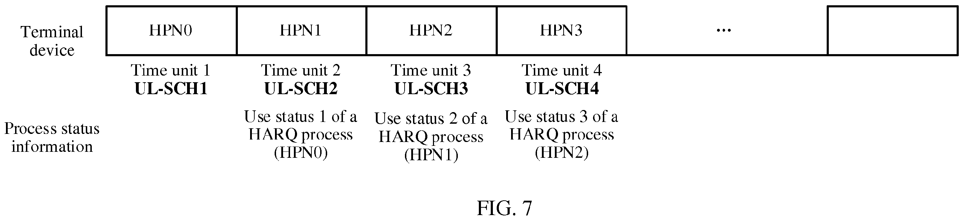

For example, there may be a correspondence between uplink data and process status information that are sent on a same channel. For example, when the terminal device needs to occupy the HARQ process to send the uplink data, the terminal device obtains process status information corresponding to the uplink data, and sends the uplink data and the corresponding process status information on the same channel. Optionally, process status information corresponding to uplink data previously sent by the terminal device and the uplink data that is currently sent may be sent on a same channel. In other words, transmission of a use status of a HARQ process in the process status information lags behind transmission of the uplink data. FIG. 7 is a schematic diagram 2 of a method for transmitting process status information of a plurality of HARQ processes according to this application. As shown in FIG. 7, the terminal device sends only uplink data UL-SCH1 in a time unit 1. The terminal device obtains uplink data UL-SCH2 in a time unit 2 and a use status 1 of a HARQ process (HPN0) corresponding to the UL-SCH1, and sends the UL-SCH2 and the use status 1 of the HARQ process (HPN0) on a same uplink channel. Correspondingly, the terminal device obtains, in a time unit 3, uplink data UL-SCH3 and a use status 2 of a HARQ process (HPN1) corresponding to the UL-SCH2, and the terminal device sends, in the time unit 3, the UL-SCH3 and the use status 2 of the HARQ process (HPN1) on a same uplink channel, or the terminal device sends, in the time unit 3, the UL-SCH3, the use status 1 of the HARQ process (HPN0), and the use status 2 of the HARQ process (HPN1) on a same uplink channel. The terminal device obtains, in a time unit 4, uplink data UL-SCH4 and a use status 3 of a HARQ process (HPN2) corresponding to the UL-SCH3, and the terminal device sends, in the time unit 4, the UL-SCH4 and the use status 3 of the HARQ process (HPN2) on the uplink channel, or the terminal device sends, in the time unit 4, the UL-SCH4, the use status 3 of the HARQ process (HPN2), and the use status 2 of the HARQ process (HPN1) on a same uplink channel, or the terminal device sends, in the time unit 4, the UL-SCH4, the use status 3 of the HARQ process (HPN2), the use status 2 of the HARQ process (HPN1), and the use status 1 of the HARQ process (HPN0) on a same uplink channel.

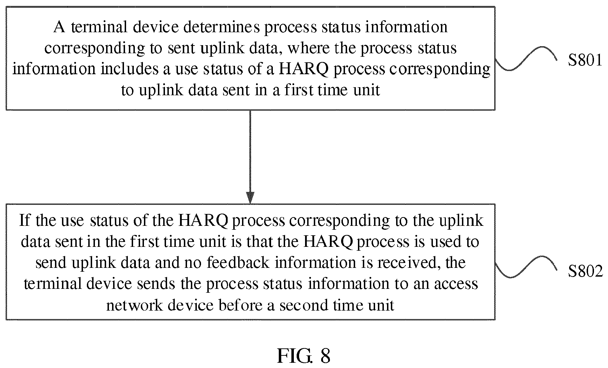

Further, based on any one of the foregoing embodiments, an embodiment of this application further provides an uplink data transmission method. A sending time of the process status information is described in detail. In the uplink data transmission method provided in this embodiment, the process status information needs to be sent before an end time unit of a time window. FIG. 8 is a schematic flowchart 3 of an uplink data transmission method according to an embodiment of this application. As shown in FIG. 8, the uplink data transmission method includes the following steps.

S801. A terminal device determines process status information corresponding to sent uplink data, where the process status information includes a use status of a HARQ process corresponding to uplink data sent in a first time unit.

S802. If the use status of the HARQ process corresponding to the uplink data sent in the first time unit is that the HARQ process is used to send uplink data and no feedback information is received, the terminal device sends the process status information to an access network device before a second time unit.

The second time unit follows the first time unit, and the second time unit is not later than a latest sending time unit in which the access network device sends feedback information corresponding to the uplink data sent in the first time unit.

It should be noted that the latest sending time unit in which the access network device sends the feedback information corresponding to the uplink data sent in the first time unit may be understood as a HARQ-ACK feedback time window corresponding to the uplink data sent in the first time unit.

Specifically, the terminal device sends the uplink data in the first time unit. For ease of description, the uplink data sent in the first time unit is referred to as first uplink data, and the HARQ process for sending the first uplink data is referred to as a first HARQ process. After the uplink data is sent, a use status of the first HARQ process changes, and the access network device needs to be notified of a changed use status of the first HARQ process. Therefore, after the terminal device sends the first uplink data, the use status of the first HARQ process needs to be included in the determined process status information.

When the use status of the first HARQ process is that the first HARQ process is used to send the uplink data and no feedback information is received, it indicates that the first uplink data is sent by the terminal device to the access network device, and no feedback information sent by the access network device is received. In this case, missed detection may occur in the access network device. Therefore, in this case, the terminal device needs to send the process status information as soon as possible, so that the terminal device and the access network device can find the missed detection as soon as possible.

In an LTE system, a HARQ-ACK feedback time window is prescribed between the terminal device and the access network device. If the terminal device does not receive, before an end of the HARQ-ACK feedback time window, feedback information that is sent by the access network device and that is specific to the first uplink data, the terminal device determines that the missed detection occurs in the access network device. In this embodiment of this application, the process status information is sent, so that the terminal device and the access network device can find the missed detection as soon as possible. Therefore, a sending time unit of process status information that includes the use status of the first HARQ process should be earlier than an end time unit of the HARQ-ACK feedback time window corresponding to the first uplink data.

For example, the terminal device sends the uplink data in the first time unit, and the second time unit follows the first time unit. The second time unit is not later than a latest sending time unit in which the access network device sends feedback information corresponding to the first uplink data. In other words, the second time unit is earlier than or equal to the end time unit of the HARQ-ACK feedback time window. The terminal device needs to send the process status information to the access network device before the second time unit.

Optionally, the terminal device may send the process status information in each uplink time unit before an end of the HARQ-ACK feedback time window, or may send a preset amount of process status information before the end of the time window. More generally, each HARQ process may be corresponding to one HARQ-ACK feedback time window. After sending the uplink data by using the HARQ process, the terminal device may send the use status of the HARQ process at least twice before the end of the HARQ-ACK feedback time window corresponding to the HARQ process. In other words, the terminal device may send the use status of the HARQ process at least twice before the second time unit.

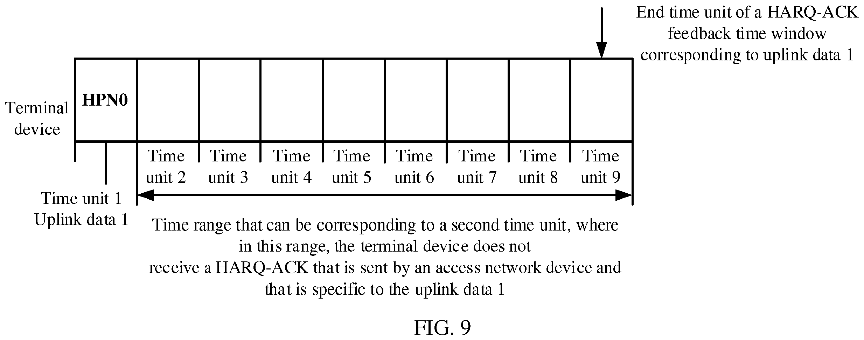

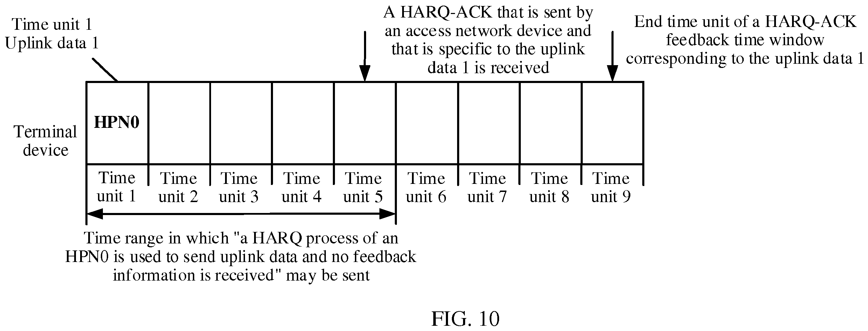

FIG. 9 is a schematic diagram 3 of a method for transmitting process status information according to this application. As shown in FIG. 9, it is assumed that the terminal device transmits, in a time unit 1, uplink data 1 by using a HARQ process of an HPNO, and an end time unit of a HARQ-ACK feedback time window corresponding to the uplink data 1 (which may also be described as a HARQ-ACK feedback time window corresponding to the HARQ process of the HPNO) is a time unit 9. In other words, if the terminal device has not received, in the time unit 9, HARQ-ACK information that is sent by an access network device and that is specific to the uplink data 1, the terminal device may retransmit the uplink data 1 in a time unit following the time unit 9 (which may be a time unit adjacent to the time unit 9, or may not be a time unit adjacent to the time unit 9. This is not specifically limited in this application). It should be noted that a start time unit of the HARQ-ACK feedback time window is not specifically limited in this application. In this case, the second time unit described above may be a time unit that follows the time unit 1 and that is not later than the time unit 9. It may be understood that the terminal provides a setting that a use status of the HARQ process of the HPNO may also be sent in the time unit 1, and the use status that is of the HARQ process of the HPNO and that is sent in the time unit 1 is "the HARQ process of the HPNO is used to send uplink data and no feedback information is received". In addition, if the terminal device receives, before the time unit 9, the HARQ-ACK information that is corresponding to the uplink data 1 and that is sent by the access network device, for example, it is assumed that the terminal device receives, in a time unit 5, the HARQ-ACK information that is corresponding to the uplink data 1 and that is sent by the access network device, it may be understood that if the terminal device no longer transmits the uplink data by using the HARQ process of the HPNO after the time unit 5, the use status corresponding to the HARQ process of the HPNO is converted to "the HARQ process of the HPNO is used to send uplink data and feedback information is received" or "the HARQ process of the HPNO is not used to send uplink data" after the time unit 5. Therefore, it may be understood that in this case, the terminal device may send a time range in which the use status is "the HARQ process of the HPNO is used to send uplink data and no feedback information is received" shown in FIG. 10. FIG. 10 is a schematic diagram 4 of a method for transmitting process status information according to this application.

For example, based on any one of the foregoing embodiments, the feedback information is used to indicate any one of the following:
the uplink data is correctly received by the access network device, the uplink data is incorrectly received by the access network device, the uplink data has been received by the access network device, or the uplink data is not received by the access network device.

Specifically, the terminal device sends response information to the access network device based on the received feedback information. For example, the response information may be receiving confirmation or uplink data retransmission.

For example, based on any one of the foregoing embodiments, before the terminal device obtains the process status information, the uplink data transmission method further includes:
receiving, by the terminal device, HARQ process status upload indication information, where the HARQ process status upload indication information is used to instruct the terminal device to send the process status information to the access network device; or
determining, by the terminal device based on to-be-sent uplink data, that the process status information needs to be sent to the access network device.

For example, when a to-be-sent uplink data volume is relatively small, because a possibility of collision that occurs in uplink grant-free uplink data transmission is relatively low, and reliability of uplink data transmission is relatively high, the process status information may not be sent. Therefore, before the terminal device obtains the process status information, the terminal device needs to receive the HARQ process status upload indication information. The HARQ process status upload indication information is used to instruct the terminal device to send the process status information to the access network device. Before the process status information is obtained, a step of obtaining the HARQ process status upload indication information is increased, so that data transmission can be reduced when the reliability of uplink data transmission is relatively high.

Optionally, before the terminal device obtains the process status information, the terminal device determines, based on the to-be-sent uplink data, that the process status information needs to be sent to the access network device. Optionally, when the terminal device determines, based on the to-be-sent uplink data, that the process status information does not need to be sent to the access network device, the terminal device transmits the uplink data in an uplink grant-free uplink data transmission method.

Optionally, in this embodiment of this application, when the uplink data may be transmitted between the terminal device and the access network device by using a plurality of code words in a time unit, each code word may be corresponding to one HARQ process, or each code word may be corresponding to a use status of one HARQ process. For example, if the uplink data is transmitted between the terminal device and the access network device by using two code words in one time unit, the two code words may be respectively corresponding to use statuses of two HARQ processes. Further, if the use status of the HARQ process (or referred to as the process status information) is expressed in a bitmap form, uplink data transmitted by using the two code words in the time unit may be corresponding to 2-bit indication information included in the process status information. Alternatively, when the uplink data is transmitted between the terminal device and the access network by using a plurality of code words in one time unit, the plurality of code words may be corresponding to one HARQ process, or the uplink data transmitted in the time unit is corresponding to a use status of one HARQ process. For example, it is still assumed that the uplink data is transmitted between the terminal device and the access network device by using two code words in one time unit, and the two code words may still be corresponding to a use status of one HARQ process. Further, if the use status of the HARQ process (or referred to as the process status information) is expressed in a bitmap form, uplink data transmitted by using the two code words in the time unit may be corresponding to 1-bit indication information included in the process status information.

Optionally, in this embodiment of this application, when the terminal device uses a plurality of carriers to transmit the uplink data, the terminal device may transmit process status information corresponding to only one of the plurality of carriers, or may transmit process status information corresponding to a plurality of carriers. This is not specifically limited. When the terminal device transmits the process status information corresponding to the plurality of carriers, process status information corresponding to each carrier may be transmitted on each corresponding carrier, or process status information corresponding to each carrier may be transmitted on a specific carrier, or the terminal device transmits the process status information on at least two specific carriers, where carriers corresponding to the process status information transmitted on the at least two specific carriers may be the same or different. The specific carrier may be a preconfigured or predefined carrier, or may be a carrier dynamically selected by the terminal device or dynamically indicated by the access network device. It is assumed that the terminal device may transmit the uplink data by using P uplink carriers and the access network device, where P is an integer greater than 1. For ease of description, it is assumed that carrier numbers corresponding to the P carriers are #0, #1, #2, ..., #(P-1). In a feasible implementation, process status information transmitted by the terminal device on a carrier #i includes only a use status of a HARQ process on the carrier #i. In other words, process status information of each carrier is transmitted on a corresponding carrier. In another feasible implementation, the terminal device transmits, on the carrier #i, process status information respectively corresponding to Q carriers included in the P carriers, where Q is a positive integer not greater than P. Further, when Q is less than P, the terminal device may further transmit, on a carrier #j, process status information respectively corresponding to remaining P-Q carriers. In the foregoing description, i and j each are any value in 0 to (P-1), and i is not equal to j. It should be noted that, in this case, the terminal device may transmit, on more than two and less than P carriers, process status information corresponding to each carrier. Carriers corresponding to process status information transmitted on each carrier may be all the same or different from each other, or partially are the same and partially are different from each other. For example, when P=5, the terminal device may transmit, on the carrier #0, process status information corresponding to five carriers, or transmit, on the carrier #0, process status information corresponding to the carrier #0 to the carrier #2, and transmit, on the carrier #1, process status information corresponding to the carrier #3 and the carrier #4 (in this case, it may be considered that all the carriers corresponding to process status information transmitted on each carrier are different from each other). Alternatively, in consideration of robustness of transmission, the terminal device may also transmit, on the carrier #0, process status information corresponding to the carrier #0 to the carrier #4, and transmit, on the carrier #1, process status information corresponding to the carrier #0 to the carrier #4 (in this case, it may be considered that all the carriers corresponding to process status information transmitted on each carrier are the same). Alternatively, the terminal device may transmit, on the carrier #0, process status information corresponding to the carrier #0 to the carrier #3, and transmit, on the carrier #1, process status information corresponding to the carrier #0, the carrier #3, and the carrier #4 (in this case, it may be considered that some carriers corresponding to process status information transmitted on each carrier is the same and some carriers are different from each other). It may be understood that the terminal device may also select more than two carriers to transmit process status information corresponding to each carrier. It should be noted that, during uplink multi-carrier transmission, this embodiment of this application sets no specific limitation on "how to determine, between the terminal device and the access network device, carriers on which process status information corresponding to carriers is transmitted". For example, the terminal device may always transmit, in a primary cell (Primary Cell, PCell), process status information corresponding to a plurality of carriers (also referred to as a plurality of cells). Alternatively, the terminal device may send the process status information in a cell with a minimum cell index number in which uplink data is transmitted. Alternatively, the terminal device may send the process status information in all cells in which uplink data is transmitted. It should be noted that in this embodiment of this application, a concept of the carrier is the same as a concept of the cell. For example, that the terminal device accesses the cell is equivalent to that the terminal device accesses the carrier.

It may be understood that, in the foregoing description, the process status information corresponding to one carrier includes a use status of at least one HARQ process applied to the carrier, and the use status of the HARQ process is the same as that in the foregoing description. Details are not described. Process status information corresponding to a plurality of carriers includes process status information corresponding to each carrier, and process status information corresponding to each carrier is the same as process status information of one carrier. Details are not described.

In an uplink multi-carrier system, it is assumed that the terminal device supports simultaneously transmitting uplink data on P uplink carriers, where a quantity of HARQs that can be applied to each carrier is K, and the terminal device transmits, on one of the P uplink carriers, process status information corresponding to the P uplink carriers. When the process status information corresponding to the P uplink carriers is expressed in a bitmap form, a quantity of bits of the process status information may be P^{∗}Q, or may be another value. This is not specifically limited. In addition, when the process status information corresponding to the P uplink carriers is expressed based on a HARQ process identifier and a use status of the HARQ process corresponding to the HARQ process identifier, to distinguish HARQ processes corresponding to different carriers, the process status information further includes an identifier of a carrier or a cell in which the HARQ process is located.

In addition, this embodiment of this application further provides an uplink data transmission method, applied to an access network device side. The method has technical features the same as or similar to that on a terminal device side. Details are not described in this application.

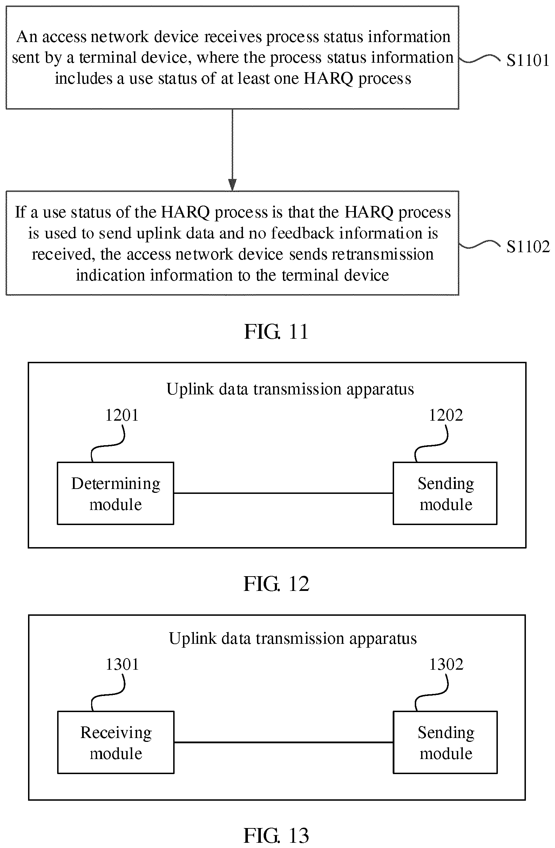

FIG. 11 is a schematic flowchart 4 of an uplink data transmission method according to an embodiment of this application. As shown in FIG. 11, the uplink data transmission method includes the following steps.

S1101. An access network device receives process status information sent by a terminal device, where the process status information includes a use status of at least one HARQ process.

The use status of the HARQ process is any one of the following: the HARQ process is not used to send uplink data, the HARQ process is used to send uplink data and no feedback information is received, or the HARQ process is used to send uplink data and feedback information is received.

S1102. If a use status of the HARQ process is that the HARQ process is used to send uplink data and no feedback information is received, the access network device sends retransmission indication information to the terminal device.

The retransmission indication information is used to instruct the terminal device to retransmit uplink data corresponding to the HARQ process whose use status is that the HARQ process is used to send uplink data and no feedback information is received.

Optionally, the retransmission indication information may be uplink grant information (for example, UL grant) or NACK information.

Optionally, the process status information indicates a use status of each of the at least one HARQ process in a bitmap form.

Optionally, a quantity of bits of the process status information is a first preset value, a quantity of use statuses of HARQ processes that are included in the process status information is a second preset value, and the first preset value is greater than or equal to the second preset value.

Optionally, a use status of any one of the at least one HARQ process separately occupies one bit in the process status information.

When the use status of the HARQ process is that the HARQ process is used to send the uplink data and no feedback information is received, the use status of the HARQ process is represented by a first value; or when the use status of the HARQ process is that the HARQ process is not used to send the uplink data or the HARQ process is used to send the uplink data and the feedback information is received, the use status of the HARQ process is represented by a second value, where the first value is different from the second value.

Optionally, the process status information further includes an identifier of each of the at least one HARQ process.

Optionally, the at least one HARQ process includes an uplink grant-free HARQ process, or includes the uplink grant-free HARQ process and an uplink grant-based HARQ process.

Optionally, the uplink data transmission method further includes:
further receiving, by the access network device, the uplink data on an uplink channel on which the process status information is received.

Optionally, the uplink data and the process status information are jointly encoded on the uplink channel.

Optionally, the uplink data transmission method further includes:
sending, by the access network device, HARQ process status upload indication information to the terminal device, where the HARQ process status upload indication information is used to instruct the terminal device to send the process status information to the access network device.

Optionally, the uplink data transmission method further includes:
receiving, by the access network device, uplink data information sent by the terminal device, and sending, to the terminal device, feedback information corresponding to the uplink data information.

Optionally, the feedback information is used to indicate any one of the following:
the uplink data is correctly received by the access network device, the uplink data is incorrectly received by the access network device, the uplink data has been received by the access network device, or the uplink data is not received by the access network device.

In addition, this embodiment of this application further provides an uplink data transmission apparatus configured to perform the uplink data transmission method on a terminal device side in the foregoing embodiment. The apparatus has a same or similar technical feature. Details are not described in this application.

FIG. 12 is a schematic structural diagram 1 of an uplink data transmission apparatus according to an embodiment of this application. In this embodiment, the uplink data transmission apparatus may be implemented by using software, hardware, or a combination of the software and the hardware. As shown in FIG. 10, the uplink data transmission apparatus includes:
a determining module 1201, configured to determine process status information, where the process status information includes a use status of at least one HARQ process, and the use status of the HARQ process is any one of the following:
the HARQ process is not used to send uplink data, the HARQ process is used to send uplink data and no feedback information is received, or the HARQ process is used to send uplink data and feedback information is received; and
a sending module 1202, configured to send the process status information to an access network device.

Optionally, the process status information indicates a use status of each of the at least one HARQ process in a bitmap form.

Optionally, a quantity of bits of the process status information is a first preset value, a quantity of use statuses of HARQ processes that are included in the process status information is a second preset value, and the first preset value is greater than or equal to the second preset value.

Optionally, a use status of any one of the at least one HARQ process separately occupies one bit in the process status information.

When the use status of the HARQ process is that the HARQ process is used to send the uplink data and no feedback information is received, the use status of the HARQ process is represented by a first value; or when the use status of the HARQ process is that the HARQ process is not used to send the uplink data or the HARQ process is used to send the uplink data and the feedback information is received, the use status of the HARQ process is represented by a second value, where the first value is different from the second value.

Optionally, the process status information further includes an identifier of each of the at least one HARQ process.

Optionally, the at least one HARQ process includes an uplink grant-free HARQ process, or includes the uplink grant-free HARQ process and an uplink grant-based HARQ process.

Optionally, the determining module 1201 is further configured to determine an uplink channel and the uplink data.

The sending module 1202 is specifically configured to send the process status information and the uplink data to the access network device on the uplink channel.

Optionally, the uplink data and the process status information are jointly encoded on the uplink channel.

According to the invention, the process status information includes a use status of a HARQ process corresponding to uplink data sent in a first time unit; and if the use status of the HARQ process corresponding to the uplink data sent in the first time unit is that the HARQ process is used to send uplink data and no feedback information is received, the sending module 1202 is specifically configured to:
send the process status information to the access network device before a second time unit, where
the second time unit follows the first time unit, and the second time unit is not later than a latest sending time unit in which the access network device sends feedback information corresponding to the uplink data sent in the first time unit.

Optionally, the feedback information is used to indicate any one of the following:
the uplink data is correctly received by the access network device, the uplink data is incorrectly received by the access network device, the uplink data has been received by the access network device, or the uplink data is not received by the access network device.

Optionally, the uplink data transmission apparatus further includes a receiving module, configured to receive HARQ process status upload indication information, where the HARQ process status upload indication information is used to instruct the uplink data transmission apparatus to send the process status information to the access network device.

Optionally, the determining module 1201 is further configured to determine, based on to-be-sent uplink data, that the process status information needs to be sent to the access network device.

In addition, this embodiment of this application further provides an uplink data transmission apparatus configured to perform the uplink data transmission method on an access network device side in the foregoing embodiment. The apparatus has a same technical feature and technical effect. Details are not described in this application.

FIG. 13 is a schematic structural diagram 2 of an uplink data transmission apparatus according to an embodiment of this application. In this embodiment, the uplink data transmission apparatus may be implemented by using software, hardware, or a combination of the software and the hardware. As shown in FIG. 13, the uplink data transmission apparatus includes:
a receiving module 1301, configured to receive process status information sent by a terminal device, where the process status information includes a use status of at least one HARQ process, and the use status of the HARQ process is any one of the following: the HARQ process is not used to send uplink data, the HARQ process is used to send uplink data and no feedback information is received, or the HARQ process is used to send uplink data and feedback information is received; and
a sending module 1302, configured to: if the use status of the HARQ process is that the HARQ process is used to send uplink data and no feedback information is received, send retransmission indication information to the terminal device, where the retransmission indication information is used to instruct the terminal device to retransmit uplink data corresponding to the HARQ process whose use status is that the HARQ process is used to send uplink data and no feedback information is received.

Optionally, the process status information indicates a use status of each of the at least one HARQ process in a bitmap form.

Optionally, a quantity of bits of the process status information is a first preset value, a quantity of use statuses of HARQ processes that are included in the process status information is a second preset value, and the first preset value is greater than or equal to the second preset value.

Optionally, a use status of any one of the at least one HARQ process separately occupies one bit in the process status information.

When the use status of the HARQ process is that the HARQ process is used to send the uplink data and no feedback information is received, the use status of the HARQ process is represented by a first value; or when the use status of the HARQ process is that the HARQ process is not used to send the uplink data or the HARQ process is used to send the uplink data and the feedback information is received, the use status of the HARQ process is represented by a second value, where the first value is different from the second value.

Optionally, the process status information further includes an identifier of each of the at least one HARQ process.

Optionally, the at least one HARQ process includes an uplink grant-free HARQ process, or includes the uplink grant-free HARQ process and an uplink grant-based HARQ process.

Optionally, the receiving module 1301 is further configured to receive uplink data on an uplink channel on which the process status information is received.

Optionally, the uplink data and the process status information are jointly encoded on the uplink channel.

Optionally, the sending module 1302 is further configured to:
send HARQ process status upload indication information to the terminal device, where the HARQ process status upload indication information is used to instruct the terminal device to send the process status information to the apparatus.

Optionally, the receiving module 1301 is further configured to:
receive uplink data information sent by the terminal device, and send, to the terminal device, feedback information corresponding to the uplink data information.

Optionally, the feedback information is used to indicate any one of the following:
the uplink data is correctly received by the apparatus, the uplink data is incorrectly received by the apparatus, the uplink data has been received by the apparatus, or the uplink data is not received by the apparatus.

In addition, this embodiment of this application further provides a terminal device configured to perform the uplink data transmission method in the foregoing embodiment. The terminal device has a same technical feature and technical effect. Details are not described in this application.

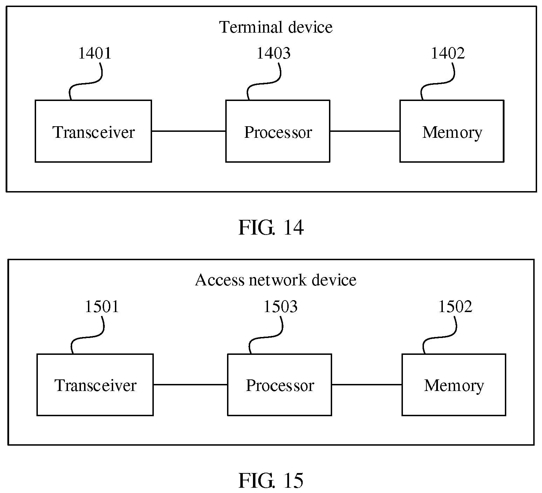

FIG. 14 is a schematic structural diagram of a terminal device according to an embodiment of this application. As shown in FIG. 14, the terminal device includes a transceiver 1401, a memory 1402, and a processor 1403. The memory 1402 may include a high-speed random access memory, and may further include a non-volatile memory, for example, at least one disk memory. The memory 1402 may store various programs to complete various processing functions and implement method steps of the embodiments. The processor 1403 is configured to execute the programs stored in the memory 1402. In this embodiment, the transceiver 1401 and the memory 1402 are coupled to the processor 1403.

The processor 1403 is configured to:
determine process status information, where the process status information includes a use status of at least one hybrid automatic repeat request (Hybrid Automatic Repeat Request, HARQ) process, and the use status of the HARQ process is any one of the following: the HARQ process is not used to send uplink data, the HARQ process is used to send uplink data and no feedback information is received, or the HARQ process is used to send uplink data and feedback information is received.

The transceiver 1401 is configured to send the process status information to an access network device.

Optionally, the process status information indicates a use status of each of the at least one HARQ process in a bitmap form.

Optionally, a quantity of bits of the process status information is a first preset value, a quantity of use statuses of HARQ processes that are included in the process status information is a second preset value, and the first preset value is greater than or equal to the second preset value.

Optionally, a use status of any one of the at least one HARQ process separately occupies one bit in the process status information.

When the use status of the HARQ process is that the HARQ process is used to send the uplink data and no feedback information is received, the use status of the HARQ process is represented by a first value; or when the use status of the HARQ process is that the HARQ process is not used to send the uplink data or the HARQ process is used to send the uplink data and the feedback information is received, the use status of the HARQ process is represented by a second value, where the first value is different from the second value.

Optionally, the process status information further includes an identifier of each of the at least one HARQ process.

Optionally, the at least one HARQ process includes an uplink grant-free HARQ process, or includes the uplink grant-free HARQ process and an uplink grant-based HARQ process.

Optionally, the processor 1403 is further configured to determine an uplink channel and uplink data.

The transceiver 1401 is specifically configured to send the process status information and the uplink data to the access network device on the uplink channel.

Optionally, the uplink data and the process status information are jointly encoded on the uplink channel.

According to the invention, the process status information includes a use status of a HARQ process corresponding to uplink data sent in a first time unit; and if the use status of the HARQ process corresponding to the uplink data sent in the first time unit is that the HARQ process is used to send uplink data and no feedback information is received, the transceiver 1401 is specifically configured to:
send the process status information to the access network device before a second time unit, where
the second time unit follows the first time unit, and the second time unit is not later than a latest sending time unit in which the access network device sends feedback information corresponding to the uplink data sent in the first time unit.

Optionally, the feedback information is used to indicate any one of the following:
the uplink data is correctly received by the access network device, the uplink data is incorrectly received by the access network device, the uplink data has been received by the access network device, or the uplink data is not received by the access network device.

Optionally, the transceiver 1401 is configured to receive HARQ process status upload indication information, where the HARQ process status upload indication information is used to instruct the terminal device to send the process status information to the access network device.

Optionally, the processor 1403 is further configured to determine, based on to-be-sent uplink data, that the process status information needs to be sent to the access network device.

In addition, this embodiment of this application further provides an access network device configured to perform the uplink data transmission method in the foregoing embodiment. The access network device has a same technical feature and technical effect. Details are not described in this application.

FIG. 15 is a schematic structural diagram of an access network device according to an embodiment of this application. As shown in FIG. 15, the access network device includes a transceiver 1501, a memory 1502, and a processor 1503. The memory 1502 may include a high-speed random access memory, and may further include a non-volatile memory, for example, at least one disk memory. The memory 1502 may store various programs to complete various processing functions and implement method steps of the embodiments. The processor 1503 is configured to execute the programs stored in the memory 1502. In this embodiment, the transceiver 1501 and the memory 1502 are coupled to the processor 1503.

The transceiver 1501 is configured to:
receive process status information sent by a terminal device, where the process status information includes a use status of at least one HARQ process, and the use status of the HARQ process is any one of the following: the HARQ process is not used to send uplink data, the HARQ process is used to send uplink data and no feedback information is received, or the HARQ process is used to send uplink data and feedback information is received, where
the transceiver 1501 is further configured to: if the use status of the HARQ process is that the HARQ process is used to send uplink data and no feedback information is received, send retransmission indication information to the terminal device, where the retransmission indication information is used to instruct the terminal device to retransmit uplink data corresponding to the HARQ process whose use status is that the HARQ process is used to send uplink data and no feedback information is received.

Optionally, the process status information indicates a use status of each of the at least one HARQ process in a bitmap form.

Optionally, a quantity of bits of the process status information is a first preset value, a quantity of use statuses of HARQ processes that are included in the process status information is a second preset value, and the first preset value is greater than or equal to the second preset value.

Optionally, a use status of any one of the at least one HARQ process separately occupies one bit in the process status information.

When the use status of the HARQ process is that the HARQ process is used to send the uplink data and no feedback information is received, the use status of the HARQ process is represented by a first value; or when the use status of the HARQ process is that the HARQ process is not used to send the uplink data or the HARQ process is used to send the uplink data and the feedback information is received, the use status of the HARQ process is represented by a second value, where the first value is different from the second value.

Optionally, the process status information further includes an identifier of each of the at least one HARQ process.

Optionally, the at least one HARQ process includes an uplink grant-free HARQ process, or includes the uplink grant-free HARQ process and an uplink grant-based HARQ process.

Optionally, the transceiver 1501 is further configured to receive uplink data on an uplink channel on which the process status information is received.

Optionally, the uplink data and the process status information are jointly encoded on the uplink channel.

Optionally, the transceiver 1501 is further configured to:
send HARQ process status upload indication information to the terminal device, where the HARQ process status upload indication information is used to instruct the terminal device to send the process status information to the access network device.

Optionally, the transceiver 1501 is further configured to:
receive uplink data information sent by the terminal device, and send, to the terminal device, feedback information corresponding to the uplink data information.

Optionally, the feedback information is used to indicate any one of the following:
the uplink data is correctly received by the access network device, the uplink data is incorrectly received by the access network device, the uplink data has been received by the access network device, or the uplink data is not received by the access network device.

In addition, it should be noted and understood that modules division of the foregoing access network device and terminal device is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of the embodiments.

In addition, function units in this application may be integrated into one processing unit, or each of the units may exist alone physically, or two or more units are integrated into one unit. The integrated unit may be implemented in a form of hardware, or may be implemented in a form of hardware in addition to a software function unit.

An embodiment of this application further provides a program, and the program is used to perform the uplink data transmission method on a terminal device side in the foregoing embodiment when being executed by a processor. This embodiment of this application further provides a program product such as a computer readable storage medium, including the foregoing program. This embodiment of this application further provides a computer readable storage medium. The computer readable storage medium stores an instruction, and when the instruction runs on a computer, the computer performs the uplink data transmission method on the terminal device side in the foregoing embodiment.

An embodiment of this application further provides a program, and the program is used to perform the uplink data transmission method on an access network device side in the foregoing embodiment when being executed by a processor. This embodiment of this application further provides a program product such as a computer readable storage medium, including the foregoing program. This embodiment of this application further provides a computer readable storage medium. The computer readable storage medium stores an instruction, and when the instruction runs on a computer, the computer performs the uplink data transmission method on the access network device side in the foregoing embodiment.

## Claims

1. An uplink data transmission method, comprising:
determining (S801), by a terminal device, process status information, wherein the process status information comprises a use status of at least one Hybrid Automatic Repeat Request, HARQ, process, and the use status of the HARQ process is any one of the following: the HARQ process is not used to send uplink data, the HARQ process is used to send uplink data and no feedback information has been received, or the HARQ process is used to send uplink data and feedback information has been received; and
sending (S802), by the terminal device, the process status information to an access network device; wherein the process status information comprises a use status of a HARQ process corresponding to uplink data sent in a first time unit; and when the use status of the HARQ process corresponding to the uplink data sent in the first time unit is that the HARQ process is used to send the uplink data and no feedback information has been received, the sending (S802), by the terminal device, the process status information to an access network device comprises:
sending, by the terminal device, the process status information to the access network device before a second time unit, wherein
the second time unit follows the first time unit, and the second time unit is not later than a latest sending time unit in which the access network device sends feedback information corresponding to the uplink data sent in the first time unit.

2. The method according to claim 1, wherein the process status information indicates a use status of each of the at least one HARQ process in a bitmap form, wherein a quantity of bits of the process status information is a first preset value, a quantity of use statuses of HARQ processes that are comprised in the process status information is a second preset value, and the first preset value is greater than or equal to the second preset value.

3. The method according to claim 2 , wherein a use status of any one of the at least one HARQ process separately occupies one bit in the process status information; and
when the use status of the HARQ process is that the HARQ process is used to send the uplink data and no feedback information has been received, the use status of the HARQ process is represented by a first value; or when the use status of the HARQ process is that the HARQ process is not used to send the uplink data or the HARQ process is used to send the uplink data and the feedback information is received, the use status of the HARQ process is represented by a second value, wherein the first value is different from the second value.

4. The method according to any one of claims 1 to 3, wherein before the sending (S802), by the terminal device, the process status information to an access network device, the method further comprises:
determining (S602), by the terminal device, an uplink channel and the uplink data, wherein
the sending, by the terminal device, the process status information to an access network device comprises:
sending (S603), by the terminal device, the process status information and the uplink data to the access network device on the uplink channel.

5. The method according to any one of claims 1 to 4, wherein before the sending (S802), by the terminal device, the process status information to an access network device, the method further comprises:
receiving, by the terminal device, HARQ process status upload indication information, wherein the HARQ process status upload indication information is used to instruct the terminal device to send the process status information to the access network device; or
determining, by the terminal device based on to-be-sent uplink data, that the process status information needs to be sent to the access network device.

6. An uplink data reception method, comprising:
receiving (S1101), by an access network device, process status information sent by a terminal device, wherein the process status information comprises a use status of at least one Hybrid Automatic Repeat Request, HARQ, process, and the use status of the HARQ process is any one of the following: the HARQ process is not used to send uplink data, the HARQ process is used to send uplink data and no feedback information has been received, or the HARQ process is used to send uplink data and feedback information has been received; and
when if the use status of the HARQ process is that the HARQ process is used to send the uplink data and no feedback information has been received, sending (S1102), by the access network device, retransmission indication information to the terminal device, wherein the retransmission indication information is used to instruct the terminal device to retransmit uplink data corresponding to the HARQ process whose use status is that the HARQ process is used to send the uplink data and no feedback information has been received; wherein the process status information comprises a use status of a HARQ process corresponding to uplink data sent in a first time unit; and when the use status of the HARQ process corresponding to the uplink data sent in the first time unit is that the HARQ process is used to send the uplink data and no feedback information has been received, the receiving, by access network device, the process status information sent by the terminal device comprises:
receiving, by the access network device, the process status information sent by the terminal device before a second time unit, wherein
the second time unit follows the first time unit, and the second time unit is not later than a latest sending time unit in which the access network device sends feedback information corresponding to the uplink data sent in the first time unit.

7. The method according to claim 6 or 1, wherein the process status information indicates a use status of each of the at least one HARQ process in a bitmap form.

8. The method according to claim 7, wherein a quantity of bits of the process status information is a first preset value, a quantity of use statuses of HARQ processes that are comprised in the process status information is a second preset value, and the first preset value is greater than or equal to the second preset value.

9. The method according to claim 7 or 8, wherein a use status of any one of the at least one HARQ process separately occupies one bit in the process status information; and
when the use status of the HARQ process is that the HARQ process is used to send the uplink data and no feedback information has been received, the use status of the HARQ process is represented by a first value; or when the use status of the HARQ process is that the HARQ process is not used to send the uplink data or the HARQ process is used to send the uplink data and the feedback information is received, the use status of the HARQ process is represented by a second value, wherein the first value is different from the second value.

10. The method according to any one of claims 6 to 9, wherein the method further comprises:
further receiving, by the access network device, the uplink data on an uplink channel on which the process status information is received.

11. The method according to claim 10 or 5, wherein the uplink data and the process status information are jointly encoded on the uplink channel.

12. The method according to any one of claims 6 to 11, wherein the method further comprises:
sending, by the access network device, HARQ process status upload indication information to the terminal device, wherein the HARQ process status upload indication information is used to instruct the terminal device to send the process status information to the access network device.

13. An apparatus configured to implement the method in accordance with any one of claims 1 to 12.

14. A computer storage medium comprising instructions which, when executed by a computer, cause the computer to carry out the method according to any one of claims 1 to 12.

## Patentansprüche

1. Uplink-Datenübertragungsverfahren, umfassend:
Bestimmen (S801) von Prozessstatusinformationen durch eine Endgerätevorrichtung, wobei die Prozessstatusinformationen einen Nutzungsstatus von mindestens einem Prozess zur hybriden automatischen Wiederholungsanfrage (Hybrid Automatic Repeat Request process - HARQ-Prozess) umfassen und der Nutzungsstatus des HARQ-Prozesses ein beliebiger der Folgenden ist: der HARQ-Prozess wird nicht zum Senden von Uplink-Daten genutzt, der HARQ-Prozess wird zum Senden von Uplink-Daten genutzt und es wurden keine Feedback-Informationen empfangen oder der HARQ-Prozess wird zum Senden von Uplink-Daten genutzt und Feedback-Informationen wurden empfangen; und
Senden (S802) der Prozessstatusinformationen an eine Zugangsnetzwerkvorrichtung durch die Endgerätevorrichtung; wobei
die Prozessstatusinformationen einen Nutzungsstatus eines HARQ-Prozesses umfassen, der Uplink-Daten entspricht, die in einer ersten Zeiteinheit gesendet wurden; und wenn
der Nutzungsstatus des HARQ-Prozesses, der den in der ersten Zeiteinheit gesendeten Uplink-Daten entspricht, ist, dass der HARQ-Prozess zum Senden der Uplink-Daten genutzt wird und keine Feedback-Informationen empfangen wurden, das Senden (S802) der Prozessstatusinformationen an eine Zugangsnetzwerkvorrichtung durch die Endgerätevorrichtung Folgendes umfasst:
Senden der Prozessstatusinformationen an die Zugangsnetzwerkvorrichtung durch die Endgerätevorrichtung vor einer zweiten Zeiteinheit, wobei
die zweite Zeiteinheit auf die erste Zeiteinheit folgt und die zweite Zeiteinheit nicht später ist als eine letzte Sendezeiteinheit, in der die Zugangsnetzwerkvorrichtung Feedback-Informationen sendet, die den in der ersten Zeiteinheit gesendeten Uplink-Daten entsprechen.

2. Verfahren nach Anspruch 1, wobei die Prozessstatusinformationen einen Nutzungsstatus von jedem des mindestens einen HARQ-Prozesses in einer Bitmap-Form anzeigen, wobei eine Menge von Bits der Prozessstatusinformationen ein erster voreingestellter Wert ist, eine Menge von Nutzungsstatus von HARQ-Prozessen, die in den Prozessstatusinformationen enthalten sind, ein zweiter voreingestellter Wert ist, und der erste voreingestellte Wert größer oder gleich dem zweiten voreingestellten Wert ist.

3. Verfahren nach Anspruch 2, wobei ein Nutzungsstatus von einem beliebigen des mindestens einen HARQ-Prozesses separat ein Bit in der Prozessstatusinformation belegt; und
wenn der Nutzungsstatus des HARQ-Prozesses ist, dass der HARQ-Prozess zum Senden der Uplink-Daten genutzt wird und keine Feedback-Informationen empfangen wurden, der Nutzungsstatus des HARQ-Prozesses durch einen ersten Wert dargestellt wird; oder wenn der Nutzungsstatus des HARQ-Prozesses ist, dass der HARQ-Prozess nicht zum Senden der Uplink-Daten genutzt wird oder der HARQ-Prozess zum Senden der Uplink-Daten genutzt wird und die Feedback-Informationen empfangen werden, der Nutzungsstatus des HARQ-Prozesses durch einen zweiten Wert dargestellt wird, wobei sich der erste Wert von dem zweiten Wert unterscheidet.

4. Verfahren nach einem der Ansprüche 1 bis 3, wobei das Verfahren vor dem Senden (S802) der Prozessstatusinformationen an eine Zugangsnetzwerkvorrichtung durch die Endgerätevorrichtung ferner Folgendes umfasst:
Bestimmen (S602) eines Uplink-Kanals und der Uplink-Daten durch die Endgerätevorrichtung, wobei
das Senden der Prozessstatusinformationen an eine Zugangsnetzwerkvorrichtung durch die Endgerätevorrichtung Folgendes umfasst:
Senden (S603) der Prozessstatusinformationen und der Uplink-Daten an die Zugangsnetzwerkvorrichtung durch die Endgerätevorrichtung auf dem Uplink-Kanal.

5. Verfahren nach einem der Ansprüche 1 bis 4, wobei das Verfahren vor dem Senden (S802) der Prozessstatusinformationen an eine Zugangsnetzwerkvorrichtung durch die Endgerätevorrichtung ferner Folgendes umfasst:
Empfangen von HARQ-Prozessstatus-Upload-Anzeigeinformationen durch die Endgerätevorrichtung, wobei die HARQ-Prozessstatus-Upload-Anzeigeinformationen verwendet werden, um die Endgerätevorrichtung anzuweisen, die Prozessstatusinformationen an die Zugangsnetzwerkvorrichtung zu senden; oder
Bestimmen, dass die Prozessstatusinformationen an die Zugangsnetzwerkvorrichtung gesendet werden müssen durch die Endgerätevorrichtung, auf Grundlage von zu sendenden Uplink-Daten.

6. Uplink-Datenempfangsverfahren, umfassend:
Empfangen (S1101) von Prozessstatusinformationen, die von einer Endgerätevorrichtung gesendet wurden, durch eine Zugangsnetzwerkvorrichtung, wobei die Prozessstatusinformationen einen Nutzungsstatus von mindestens einem Prozess zur hybriden automatischen Wiederholungsanfrage (Hybrid Automatic Repeat Request process - HARQ-Prozess) umfassen und der Nutzungsstatus des HARQ-Prozesses ein beliebiger der Folgenden ist: der HARQ-Prozess wird nicht zum Senden von Uplink-Daten genutzt, der HARQ-Prozess wird zum Senden von Uplink-Daten genutzt und es wurden keine Feedback-Informationen empfangen oder der HARQ-Prozess wird zum Senden von Uplink-Daten genutzt und Feedback-Informationen wurden empfangen; und wenn
der Nutzungsstatus des HARQ-Prozesses ist, dass der HARQ-Prozess zum Senden der Uplink-Daten genutzt wird und keine Feedback-Informationen empfangen wurden, Senden (S1102) von Neuübertragungs-Anzeigeinformationen an die Endgerätevorrichtung durch die Zugangsnetzwerkvorrichtung, wobei die Neuübertragungs-Anzeigeinformationen verwendet werden, um die Endgerätevorrichtung anzuweisen, Uplink-Daten, die dem HARQ-Prozess entsprechen, dessen Nutzungsstatus ist, dass der HARQ-Prozess zum Senden der Uplink-Daten genutzt wird und keine Feedback-Informationen empfangen wurden, erneut zu übertragen; wobei
die Prozessstatusinformationen einen Nutzungsstatus eines HARQ-Prozesses umfassen, der Uplink-Daten entspricht, die in einer ersten Zeiteinheit gesendet wurden; und wenn
der Nutzungsstatus des HARQ-Prozesses, der den in der ersten Zeiteinheit gesendeten Uplink-Daten entspricht, ist, dass der HARQ-Prozess zum Senden der Uplink-Daten genutzt wird und keine Feedback-Informationen empfangen wurden, das Empfangen der Prozessstatusinformationen, die von der Endgerätevorrichtung gesendet wurden, durch die Zugriffsnetzwerkvorrichtung Folgendes umfasst:
Empfangen der Prozessstatusinformationen, die von der Endgerätevorrichtung gesendet wurden, durch die Zugangsnetzwerkvorrichtung vor einer zweiten Zeiteinheit, wobei
die zweite Zeiteinheit auf die erste Zeiteinheit folgt und die zweite Zeiteinheit nicht später ist als eine letzte Sendezeiteinheit, in der die Zugangsnetzwerkvorrichtung Feedback-Informationen sendet, die den in der ersten Zeiteinheit gesendeten Uplink-Daten entsprechen.

7. Verfahren nach Anspruch 6 oder 1, wobei die Prozessstatusinformationen einen Nutzungsstatus von jedem des mindestens einen HARQ-Prozesses in einer Bitmap-Form anzeigen.

8. Verfahren nach Anspruch 7, wobei eine Menge von Bits der Prozessstatusinformationen ein erster voreingestellter Wert ist, eine Menge von Nutzungsstatus von HARQ-Prozessen, die in den Prozessstatusinformationen enthalten sind, ein zweiter voreingestellter Wert ist und der erste voreingestellte Wert größer oder gleich dem zweiten voreingestellten Wert ist.

9. Verfahren nach Anspruch 7 oder 8, wobei ein Nutzungsstatus von einem beliebigen des mindestens einen HARQ-Prozesses separat ein Bit in den Prozessstatusinformationen belegt; und
wenn der Nutzungsstatus des HARQ-Prozesses ist, dass der HARQ-Prozess zum Senden der Uplink-Daten genutzt wird und keine Feedback-Informationen empfangen wurden, der Nutzungsstatus des HARQ-Prozesses durch einen ersten Wert dargestellt wird; oder wenn der Nutzungsstatus des HARQ-Prozesses ist, dass der HARQ-Prozess nicht zum Senden der Uplink-Daten genutzt wird oder der HARQ-Prozess zum Senden der Uplink-Daten genutzt wird und die Feedback-Informationen empfangen werden, der Nutzungsstatus des HARQ-Prozesses durch einen zweiten Wert dargestellt wird, wobei sich der erste Wert von dem zweiten Wert unterscheidet.

10. Verfahren nach einem der Ansprüche 6 bis 9, wobei das Verfahren ferner Folgendes umfasst:
weiteres Empfangen der Uplink-Daten durch die Zugangsnetzwerkvorrichtung auf einem Uplink-Kanal, auf dem die Prozessstatusinformationen empfangen werden.

11. Verfahren nach Anspruch 10 oder 5, wobei die Uplink-Daten und die Prozessstatusinformationen auf dem Uplink-Kanal gemeinsam codiert werden.

12. Verfahren nach einem der Ansprüche 6 bis 11, wobei das Verfahren ferner Folgendes umfasst:
Senden von HARQ-Prozessstatus-Upload-Anzeigeinformationen an die Endgerätevorrichtung durch die Zugangsnetzwerkvorrichtung, wobei die HARQ-Prozessstatus-Upload-Anzeigeinformationen verwendet werden, um die Endgerätevorrichtung anzuweisen, die Prozessstatusinformationen an die Zugangsnetzwerkvorrichtung zu senden.

13. Vorrichtung, die dazu konfiguriert ist, das Verfahren nach einem der Ansprüche 1 bis 12 umzusetzen.

14. Computerspeichermedium, das Anweisungen umfasst, die bei Ausführung durch einen Computer den Computer dazu veranlassen, das Verfahren nach einem der Ansprüche 1 bis 12 auszuführen.

## Revendications

1. Procédé de transmission de données en liaison montante, comprenant :
la détermination (S801), par un dispositif terminal, d'informations d'état de processus, dans lequel les informations d'état de processus comprennent un état d'utilisation d'au moins un processus de demande de répétition automatique hybride, HARQ, et l'état d'utilisation du processus HARQ est l'un quelconque des éléments suivants : le processus HARQ n'est pas utilisé pour envoyer des données en liaison montante, le processus HARQ est utilisé pour envoyer des données en liaison montante et aucune information de retour n'a été reçue, ou le processus HARQ est utilisé pour envoyer des données en liaison montante et des informations de retour ont été reçues ; et
l'envoi (S802), par le dispositif terminal, des informations d'état de processus à un dispositif de réseau d'accès ; dans lequel
les informations d'état de processus comprennent un état d'utilisation d'un processus HARQ correspondant à des données en liaison montante envoyées dans une première unité de temps ; et lorsque
l'état d'utilisation du processus HARQ correspondant aux données en liaison montante envoyées dans la première unité de temps est tel que le processus HARQ est utilisé pour envoyer les données en liaison montante et qu'aucune information de retour n'a été reçue, l'envoi (S802), par le dispositif terminal, des informations d'état de processus à un dispositif de réseau d'accès comprend :
l'envoi, par le dispositif terminal, des informations d'état de processus au dispositif de réseau d'accès avant une seconde unité de temps, dans lequel
la seconde unité de temps suit la première unité de temps, et la seconde unité de temps n'est pas postérieure à une dernière unité de temps d'envoi dans laquelle le dispositif de réseau d'accès envoie des informations de retour correspondant aux données en liaison montante envoyées dans la première unité de temps.

2. Procédé selon la revendication 1, dans lequel les informations d'état de processus indiquent un état d'utilisation de chacun de l'au moins un processus HARQ sous une forme de bitmap, dans lequel une quantité de bits des informations d'état de processus est une première valeur prédéfinie, une quantité d'états d'utilisation de processus HARQ qui sont compris dans les informations d'état de processus est une seconde valeur prédéfinie, et la première valeur prédéfinie est supérieure ou égale à la seconde valeur prédéfinie.

3. Procédé selon la revendication 2, dans lequel un état d'utilisation de l'un quelconque de l'au moins un processus HARQ occupe séparément un bit dans les informations d'état de processus ; et
lorsque l'état d'utilisation du processus HARQ est tel que le processus HARQ est utilisé pour envoyer les données en liaison montante et qu'aucune information de retour n'a été reçue, l'état d'utilisation du processus HARQ est représenté par une première valeur ; ou lorsque l'état d'utilisation du processus HARQ est tel que le processus HARQ n'est pas utilisé pour envoyer les données en liaison montante ou que le processus HARQ est utilisé pour envoyer les données en liaison montante et que les informations de retour sont reçues, l'état d'utilisation du processus HARQ est représenté par une seconde valeur, dans lequel la première valeur est différente de la seconde valeur.

4. Procédé selon l'une quelconque des revendications 1 à 3, dans lequel, avant l'envoi (S802), par le dispositif terminal, des informations d'état de processus à un dispositif de réseau d'accès, le procédé comprend en outre :
la détermination (S602), par le dispositif terminal, d'un canal en liaison montante et des données en liaison montante, dans lequel
l'envoi, par le dispositif terminal, des informations d'état de processus à un dispositif de réseau d'accès comprend :
l'envoi (S603), par le dispositif terminal, des informations d'état de processus et des données en liaison montante au dispositif de réseau d'accès sur le canal en liaison montante.

5. Procédé selon l'une quelconque des revendications 1 à 4, dans lequel, avant l'envoi (S802), par le dispositif terminal, des informations d'état de processus à un dispositif de réseau d'accès, le procédé comprend en outre :
la réception, par le dispositif terminal, d'informations d'indication de chargement d'état de processus HARQ, dans lequel les informations d'indication de chargement de processus HARQ sont utilisées pour ordonner au dispositif terminal d'envoyer les informations d'état de processus au dispositif de réseau d'accès ; ou
la détermination, par le dispositif terminal sur la base de données en liaison montante à envoyer, du fait que les informations d'état de processus doivent être envoyées au dispositif de réseau d'accès.

6. Procédé de réception de données en liaison montante, comprenant :
la réception (S1101), par un dispositif de réseau d'accès, d'informations d'état de processus envoyées par un dispositif terminal, dans lequel les informations d'état de processus comprennent un état d'utilisation d'au moins un processus de demande de répétition automatique hybride, HARQ, et l'état d'utilisation du processus HARQ est l'un quelconque des éléments suivants : le processus HARQ n'est pas utilisé pour envoyer des données en liaison montante, le processus HARQ est utilisé pour envoyer des données en liaison montante et aucune information de retour n'a été reçue, ou le processus HARQ est utilisé pour envoyer des données en liaison montante et des informations de retour ont été reçues ; et
lorsque
l'état d'utilisation du processus HARQ est tel que le processus HARQ est utilisé pour envoyer les données en liaison montante et qu'aucune information de retour n'a été reçue, l'envoi (S1102), par le dispositif de réseau d'accès, d'informations d'indication de retransmission au dispositif terminal, dans lequel les informations d'indication de retransmission sont utilisées pour ordonner au dispositif terminal de retransmettre les données en liaison montante correspondant au processus HARQ dont l'état d'utilisation est tel que le processus HARQ est utilisé pour envoyer les données en liaison montante et qu'aucune information de retour n'a été reçue ; dans lequel
les informations d'état de processus comprennent un état d'utilisation d'un processus HARQ correspondant à des données en liaison montante envoyées dans une première unité de temps ; et lorsque
l'état d'utilisation du processus HARQ correspondant aux données en liaison montante envoyées dans la première unité de temps est tel que le processus HARQ est utilisé pour envoyer les données en liaison montante et qu'aucune information de retour n'a été reçue, la réception, par le dispositif de réseau d'accès, des informations d'état de processus envoyées par le terminal comprend :
la réception, par le dispositif de réseau d'accès, des informations d'état de processus envoyées par le dispositif terminal avant une seconde unité de temps, dans lequel
la seconde unité de temps suit la première unité de temps, et la seconde unité de temps n'est pas postérieure à une dernière unité de temps d'envoi dans laquelle le dispositif de réseau d'accès envoie des informations de retour correspondant aux données en liaison montante envoyées dans la première unité de temps.

7. Procédé selon la revendication 6 ou 1, dans lequel les informations d'état de processus indiquent un état d'utilisation de chacun des au moins un processus HARQ sous une forme de bitmap.

8. Procédé selon la revendication 7,
dans lequel une quantité de bits des informations d'état de processus
est une première valeur prédéfinie, une quantité d'états d'utilisation de processus HARQ qui sont compris dans les informations d'état de processus est une seconde valeur prédéfinie, et la première valeur prédéfinie est supérieure ou égale à la seconde valeur prédéfinie.

9. Procédé selon la revendication 7 ou 8, dans lequel un état d'utilisation de l'un quelconque de l'au moins un processus HARQ occupe séparément un bit dans les informations d'état de processus ; et
lorsque l'état d'utilisation du processus HARQ est tel que le processus HARQ est utilisé pour envoyer les données en liaison montante et qu'aucune information de retour n'a été reçue, l'état d'utilisation du processus HARQ est représenté par une première valeur ; ou lorsque l'état d'utilisation du processus HARQ est tel que le processus HARQ n'est pas utilisé pour envoyer les données en liaison montante ou que le processus HARQ est utilisé pour envoyer les données en liaison montante et que les informations de retour sont reçues, l'état d'utilisation du processus HARQ est représenté par une seconde valeur, dans lequel la première valeur est différente de la seconde valeur.

10. Procédé selon l'une quelconque des revendications 6 à 9, dans lequel le procédé comprend en outre :
la réception supplémentaire, par le dispositif de réseau d'accès, des données en liaison montante sur un canal en liaison montante sur lequel les informations d'état de processus sont reçues.

11. Procédé selon la revendication 10 ou 5, dans lequel les données en liaison montante et les informations d'état de processus sont codées conjointement sur le canal en liaison montante.

12. Procédé selon l'une quelconque des revendications 6 à 11, dans lequel le procédé comprend en outre :
l'envoi, par le dispositif de réseau d'accès, d'informations d'indication de chargement d'état de processus HARQ au dispositif terminal, dans lequel les informations d'indication de chargement d'état de processus HARQ sont utilisées pour ordonner au dispositif terminal d'envoyer les informations d'état de processus au dispositif de réseau d'accès.

13. Appareil configuré pour mettre en œuvre le procédé selon l'une quelconque des revendications 1 à 12.

14. Support de stockage informatique comprenant des instructions qui, lorsqu'elles sont exécutées par un ordinateur, amènent l'ordinateur à mettre en œuvre
le procédé selon l'une quelconque des revendications 1 à 12.
